# EUROPÄISCHE PATENTSCHRIFT

(11) **EP 0 709 314 B1**
(45) Veröffentlichungstag und Bekanntmachung des Hinweises auf die Patenterteilung: **16.09.1998**
(21) Anmeldenummer: 95116922.6
(22) Anmeldetag: 27.10.1995
(51) Int. Cl.: B65G 47/24

(54) **Vorrichtung zum lageorientierten Zuführen asymmetrischer Werkstücke**
Device for oriented feeding of asymmetrical workpieces
Dispositif d'alimentation orientée pour pièces asymétriques

(30) Priorität: 28.10.1994 DE 4438574
(43) Veröffentlichungstag der Anmeldung: 01.05.1996
(73) Patentinhaber: SMR Sondermaschinen Ruhla GmbH, D-99842 Ruhla (DE)
(72) Erfinder: Nikolaus, Walter, D-99846 Seebach (DE); Bartel, Klaus, D-99843 Thal (DE)
(74) Vertreter: Liedtke, Klaus, Dr.

(56) Entgegenhaltungen:
- DD-A- 255 715
- DE-A- 3 242 044
- DE-A- 3 824 536
- FR-A- 2 696 724
- US-A- 3 447 662
- US-A- 4 024 944
- US-A- 4 513 852
- US-A- 4 940 128
- PATENT ABSTRACTS OF JAPAN vol. 17 no. 358 (M-1440) ,7.Juli 1993 & JP-A-05 051123 (ROHM CO.) 2.März 1993,
- PATENT ABSTRACTS OF JAPAN vol. 9 no. 152 (M-391) [1875] ,27.Juni 1985 & JP-A-60 029260 (ROOMU) 14.Februar 1985,

## Beschreibung

Die Erfindung betrifft eine Vorrichtung zum lageorientierten Zuführen asymmetrischer Werkstücke beim Beschicken von Verarbeitungsmaschinen, bei denen die Werkstücke auf einer Zuführungsschiene, in der eine Wendestation und ein Sensor zur Erkennung der Sollage der Werkstücke angeordnet sind, transportiert werden.

Im Stand der Technik sind Zuführeinrichtungen zum Beschicken von Verarbeitungsmaschinen in vielfältiger Form bekannt. Diese Zuführeinrichtungen enthalten häufig auch Vereinzelungs- und Sortiervorrichtungen. Diese Vorrichtungen sind erforderlich, da asymmetrische Teile in einer bestimmten Lage verarbeitet werden müssen. Wenn der Verarbeitungsmaschine Teile in Falschlage zugeführt werden, treten erheblichen Störungen des Verarbeitungsablaufes auf. Die Beseitigung von Störungen in der Zuführung erfordert den Stillstand der Verarbeitungsmaschine, um Unfallgefahren bei der Beseitigung derartiger Störungen auszuschließen. Fehlerhaft eingeführte Teile führen deshalb nicht nur zu erheblichen Schäden in der Verarbeitungsmaschine, sondern auch zu hohen Folgekosten. Die Zuführung fehlerhafter Teile muß deshalb ausgeschlossen werden, wobei an die Zuverlässigkeit der Sortiervorrichtungen hohe Anforderungen gestellt werden.

Es sind im Stand der Technik auch Zuführungen mit Sortiereinrichtungen bekannt, die die Zuführung von Werkstücken in Falschlage dadurch verhindern, daß diese Teile aus der Zuführeinrichtung ausgeschieden werden. Dabei ist es nachteilig, daß durch das Ausscheiden falschliegender Teile Unterbrechungen im Zuführungsprozeß auftreten, die nur eine geringe Taktfrequenz der Zuführung und damit auch der Bearbeitung ermöglichen. Zur Erhöhung der Taktfrequenz ist es bekannt, Zuführungen doppelt vorzusehen, wobei nach dem Ausscheiden der falschliegenden Teile die in den beiden Zuführungen transportierten Teile einer gemeinsamen Zuführung zusammengeführt werden müssen. Eine derartige Anordnung erfordert einen hohen Aufwand und ist störanfällig.

In DD 255 715 A 1 ist eine Vorrichtung zum Vereinzeln und zum lageorientierten Bereitstellen von Stiftschrauben beschrieben, die aus einem Speicher automatisch zugeführt werden können. Dabei sind in einem feststehenden Gehäuse ein um 45° zur Lotrechten geneigtes Zuführrohr, senkrecht dazu ein Abführrohr und im Gehäuse ein mit einer radialen, dem Durchmesser der stiftschraube entsprechenden Bohrung versehenes Drehteil angeordnet, das eine entsprechende Prüfeinrichtung enthält und mit einem Antrieb verbunden ist. Diese Anordnung enthält eine Wendestation und einen Sensor zur Lageerkennung des Werkstückes und ist damit geeignet, die lageorientierte Bereitstellung dieser Teile zu gewährleisten. Nachteilig ist hierbei jedoch, daß die Bewegung der Werkstücke durch die Schwerkraft erfolgt, wodurch nur geringe Arbeitsgeschwindigkeiten erreicht werden können.

In US-PS 34 47 662 ist eine Vorrichtung zum Sortieren von Flaschen beschrieben, bei der in Transportrichtung nacheinander zwei Wendeeinrichtungen angeordnet sind, die von je einem Elektromotor angetrieben werden. Eine dieser Wendeeinrichtungen ist mit einem Sensor, der die Anwesenheit eines Teiles erkennte, versehen.

Bei diesen Vorrichtungen ist nachteilig, daß unabhängig davon, ob das Teil in der Wendeeinrichtung die richtige oder die falsche Lage einnimmt, sich die Taktzeit jeweils nach der Zeit, die zum Wenden eines falschliegenden Teiles benötigt wird, richten muß. Demzufolge sind diese Anordnungen auch nur für geringe Arbeitsgeschwindigkeiten geeignet.

Der Erfindung liegt die Aufgabe zugrunde, eine Vorrichtung zum lageorientierten Zuführen asymmetrischer Werkstücke beim Beschicken von Verarbeitungsmaschinen anzugeben, die eine hohe Taktfrequenz der Zuführung ermöglicht, eine hohe Zuverlässigkeit aufweist und kostengünstig herstellbar ist.

Erfindungsgemäß wird die Aufgabe dadurch gelöst, daß an der Wendestation ein Schwenkmotor und koaxial zum Schwenkmotor ein schwenkbarer Anschlag angeordnet sind, der zwei Anschlagflächen enthält, die jeweils auf der Einlauf- und der Auslaufseite der Wendestation den Transportweg verschließen und freigeben.

Vorteilhafte Ausgestaltungen der erfindungsgemäßen Vorrichtung sind in den Unteransprüchen angegeben.

Die erfindungsgemäße Vorrichtung gewährleistet, daß falschliegende Teile mit hoher Sicherheit erkannt werden und daß gleichzeitig eine hohe Taktfrequenz erreicht wird.
Durch die parallele Anordnung von zwei Lichtschranken und durch die Verbindung der beiden Anschlagteile an einem drehend bewegtem Teil sowie durch den kurzen Hub des Anschlages mit kurzen Schwenkbewegungen kann die richtige Drehlage des Werkstückes schnell erkannt und dieses Werkstück sofort aus der Wendevorrichtung heraus transportiert werden, ohne daß ein Leerhub oder eine Stillstandszeit abgewartet werden muß. Damit kann eine hohe Arbeitsgeschwindigkeit der lageorientierten Zuführung verwirklicht werden. Durch die erfindungsgemäße Anordnung der beiden Anschläge in einem Drehteil wird nur eine Steuerung und nur ein Antrieb für zwei Anschlagsfunktionen benötigt. Die koaxiale Anordnung von Wendeeinrichtung und Anschlagsystem ermöglicht eine kurze Baulänge der Vorrichtung, was ebenfalls zur Verkürzung der Durchlaufzeiten und damit zur Erhöhung der Taktfrequenz beiträgt. Durch die erfindungsgemäße Anordnung von Luftdüsen wird der Werkstücktransport ebenfalls beschleunigt, wobei auch Werkstücke mit hohem Reibungswiderstand schnell transportiert werden können.

Weiterhin ist vorteilhaft, daß durch nochmalige Abfrage der Sollage nach dem Wendevorgang eine hohe Sicherheit für die lagerichtige Zuführung erreicht wird, so daß Falschlagen praktisch nicht mehr auftreten können. Die erfindungsgemäße Vorrichtung erreicht deshalb mit einfachen Mitteln eine hohe Funktionssicherheit und gleichzeitig eine hohe Arbeitsgeschwindigkeit.
Die Vorrichtung ist für das Zusammenwirken mit einem Vibrationsförderer besonders geeignet und ermöglicht die schnelle lageorientierte Zufuhr aller vom Vibrationsförderer bereitgestellten Werkstücke.

Der pneumatische Antrieb der Vorrichtung ist besonders vorteilhaft, weil die Pneumatik für die Bewegungsfunktionen der Wendeeinrichtung und für den Transport der Werkstücke aus der Wendeeinrichtung gleichzeitig genutzt werden können, was wesentlich zu einem einfachen Aufbau der Gesamtvorrichtung beiträgt. Es können jedoch auch elektrisch betriebene Antriebe, beispielsweise Schrittmotoren eingesetzt werden.

Die Erfindung wird im folgenden anhand eines Ausführungsbeispieles näher erläutert. In der zugehörigen Zeichnung zeigen:
Figur 1 eine Draufsicht auf die erfindungsgemäße Sortiervorrichtung;
Figur 2 einen Längsschnitt durch die Vorrichtung gemäß Figur 1;
Figur 3 eine Vorrichtung zum Wenden des Werkstückes um eine in Transportrichtung liegende Achse in einem Fall, in dem eine Falschlage des Teiles gegeben ist
   und
Figur 4 die Anordnung gemäß Figur 3 beim Durchlaufen eines Teiles in der Sollage.

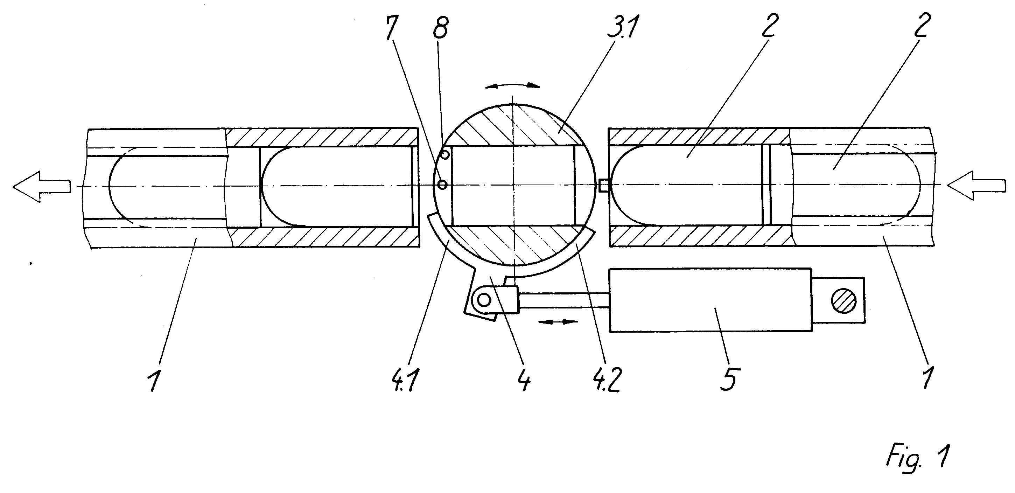

Wie aus Figur 1 ersichtlich ist, werden die Werkstücke 2 von einem Werkstückförderer in der Zuführungsschiene 1 in Pfeilrichtung gefördert. Sie gelangen dort in die Wendeeinrichtung, wo sie in dem oberen Aufsatzstück 3.1 des Motors 3 aufgenommen werden. Dabei befindet sich im dargestellten Fall der Anschlag 4 in der Stellung, bei der die innere Anschlagsfläche 4.1 die Bewegung des Werkstückes 2 stoppt, wenn diese ihre Sollage erreicht hat. In dieser Lage wird der Lichtstrahl des Anwesenheitssensors 7 unterbrochen, so daß die Anwesenheit des Werkstückes 2 in der Endlage der Wendevorrichtung signalisiert werden kann. Der Sensor 8 ermöglicht die Unterscheidung der Falsch- oder Sollage des Werkstücks 2. Befindet sich das Werkstück 2 in der Sollage, die in der Zeichnung das vordere Werkstück 2 einnimmt, so wird der auf den Sollagensensor 8 fallende Lichtstrahl nicht unterbrochen. Die Sensoren melden in diesem Fall, daß das Teil anwesend ist und sich in der richtigen Lage befindet. Daraufhin wird eine Signalauslösung bewerkstelligt, die den Antrieb 5 für den Anschlag 4 betätigt und dieser schwenkt entgegen der Uhrzeigerrichtung in seine untere Stellung. In dieser Stellung kann das Werkstück 2 die Wendevorrichtung verlassen, da die innere Anschlagsfläche 4.1 die weitere Bewegung des Teiles 2 freigibt. Die äußere Anschlagsfläche 4.2 sperrt dabei das vor der Wendevorrichtung liegende nächste Werkstück 2. Sobald an den beiden Sensoren 7 und 8 die Lichtstrahlen nicht mehr unterbrochen sind, stellen diese das Verlassen der Wendevorrichtung fest und der Anschlag 4 bewegt sich sofort zurück in die Ausgangsstellung. Dadurch wird die äußere Anschlagsfläche 4.2 aus dem Transportweg der Werkstücke 2 genommen, so daß das nächste Teil passieren kann und in das Aufsatzstück 3.1 eingeschoben wird. Fährt das Werkstück 2 in der Weise in das Ansatzstück 3.1 ein, die der Lage des hinteren Teiles entspricht, so gelangt das Werkstück 2 ebenfalls bis zur inneren Anschlagsfläche 4.1. In diesem Fall werden jedoch die Lichtstrahlen sowohl des Anwesenheitssensors 7 als auch des Sollagensensors 8 verdeckt, so daß beide Sensoren ein Signal abgeben. Dieses Signal kennzeichnet sowohl die Anwesenheit des Teiles in der Endlage als auch dessen Falschlage. Daraufhin wird der Motor 3 in Bewegung versetzt und schwenkt um 180°. Dort wird die Drehlage von Werkstück 2 nochmals abgefragt. Danach bewegt sich der Anschlag 4 entgegen dem Uhrzeigersinn, so daß das Teil nachdem Erreichen der Sollage aus der Wendeeinrichtung transportiert werden kann.

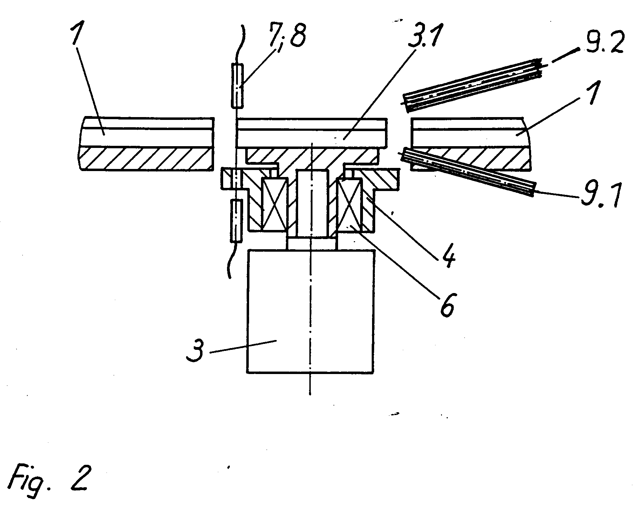

Der in Figur 2 dargestellte Schnitt erläutert die Anordnung der Schwenkteile. Der Motor 3 bildet das Grundelement, auf dem das Aufsatzstück 3.1 befestigt ist. Das Aufsatzstück 3.1 wird mit dem Motor 3 je nach der benötigten Stellung um jeweils 180° verschwenkt. Koaxial zum Motor 3 ist der Anschlag 4 angebracht. Der Anschlag 4 ist in einer Lagerung 6 am Motor 3 befestigt. Als Lagerung 6 ist in diesem Beispiel ein Nadellager gewählt.
Besonders vorteilhaft ist, daß die Vorrichtung auch zum Handhaben von Teilen, die empfindliche Flächen oder Flächen mit großen Reibungswiderstand aufweisen, geeignet ist. Derartige Flächen treten häufig an Teilen auf, die eine Klebefläche beinhalten. Um ein Festkleben der Werkstücke 2 in der Wendevorrichtung zu vermeiden, ist in der Zuführungsstelle 1 eine Luftdüse 9.1 in Form einer Bohrung angebracht, durch die Luft geblasen wird. Die Bohrung verläuft schräg von unten nach oben, so daß das Teil durch die aus der Luftdüse 9.1 ausströmende Luft stets an die obere Begrenzung des Aufsatzstückes 3 gedrückt wird. Die Luftdüse 9 dient außerdem dem schnellen Transport der Werkstücke 2 aus der Wendevorrichtung heraus. Eine weitere Luftdüse 9.2, die schräg von oben in Transportrichtung auf die Wendevorrichtung gerichtet ist, bewirkt beim Einlauf in und beim Auslauf aus der Wendevorrichtung eine starke Beschleunigung des Werkstücks 2. Die erfindungsgemäße Vorrichtung ermöglicht es, auf zusätzliche Antriebsenergien zu verzichten, da sowohl der Motor 3 der Wendeeinrichtung als auch der Antrieb 5 für den Anschlag pneumatisch angetrieben werden können und die für die Pneumatik erforderliche Druckluft gleichzeitig das Werkstückes 2 aus der Wendevorrichtung bläst. Daneben dient die Druckluft noch zum oben beschriebenen Abheben von Klebeflächen, die sich an der Unterseite des Werkstücks 2 befinden können.

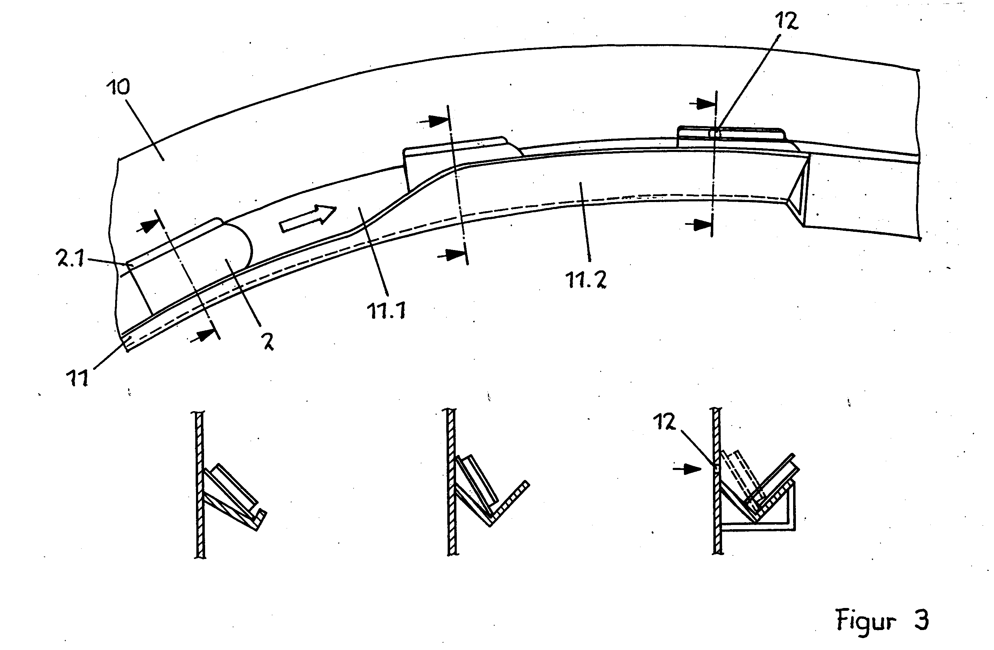

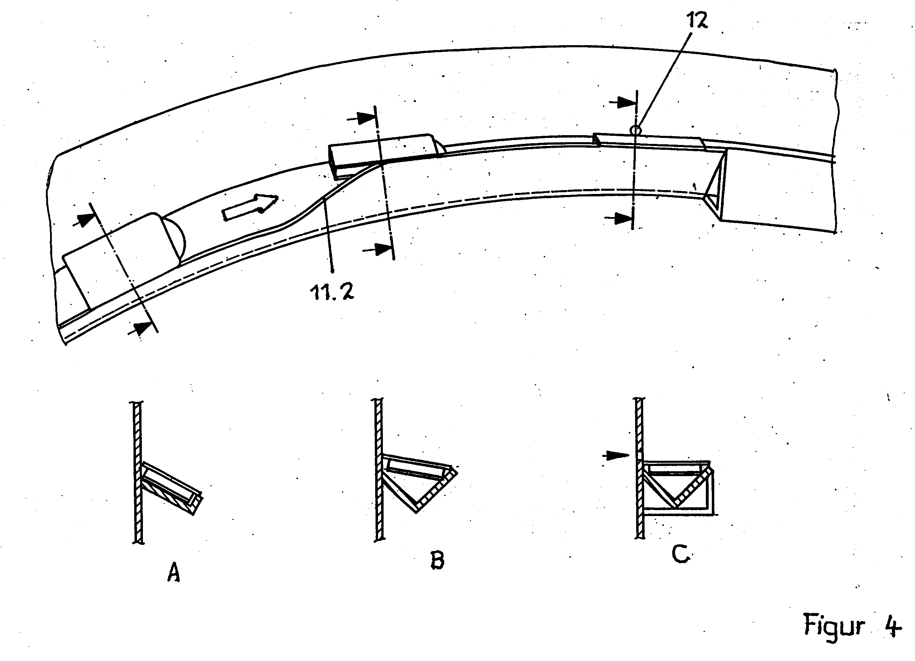

Die Figuren 3 und 4 erläutern die Vorrichtung zum zusätzlichen Wenden von Werkstücken um eine Achse in Transportrichtung. Das Werkstück 2 weist dabei eine Grundfläche 2.1 auf, die breiter ist als die sonstige Breite des Werkstückes 2. Das Werkstück 2 wird von dem Schwingförderer 10 in Pfeilrichtung bewegt. In Figur 3 ist die Falschlage des Werkstücks dargestellt, bei der sich die Grundfläche unterhalb der übrigen Teile des Werkstückes 2 befindet. In dieser Lage ist die Breite dieser Grundfläche 2.1 größer als die Breite der Grundfläche 11.1 der Laufschiene. Das Werkstück 2 ist demzufolge gegenüber der Grundfläche der Laufschiene 11.1 geneigt. Diese Neigung verstärkt sich in der Bewegungsrichtung dadurch, daß die Breite der Grundfläche 11.1 der Laufschiene kontinuierlich abnimmt. Die Neigung ist den Schnittdarstellungen A, B und C jeweils zu entnehmen. An der Stelle C, an der die Neigung am größten ist, befindet sich im Schwingförderer 10 eine Zusatzluftdüse 12. Passiert nun das Werkstück 2 diesen Ort, so wird durch die aus der Zusatzluftdüse 12 ausströmende Luft, die im oberen Bereich auftrifft, dieses in die Sollage gekippt. Nach dieser Stelle ist die Laufschiene 11 wieder entsprechend verbreitert, so daß das Werkstück 2, daß nunmehr die Sollage eingenommen hat, in dieser Lage weitertransportiert wird.

In Figur 4 ist der Transportweg eines Werkstückes 2 dargestellt, das die Wendevorrichtung bereits in der Sollage erreicht, bei dem sich also die breitere Grundfläche oben befindet. In diesem Fall gleitet das Werkstück 2 mit dem nach außen überstehenden Bereich seiner Grundfläche auf der Seitenfläche 11.2 der Laufschiene. Die Mindesthöhe der Seitenfläche 11.2 ist dabei etwas größer als die Höhe des Werkstückes 2 ohne Grundfläche, so daß das Werkstück 2 auf der Seitenfläche 11.2 gleitet. Es erreicht dadurch die Stelle C an der Laufschiene in etwa waagerechter Lage, so daß die Zusatzluftdüse 12 oberhalb des Werkstückes 2 liegt und das Werkstück 2 vom Luftstrom nicht erfaßt wird und demzufolge die Laufschiene 11 ohne Lageänderung passiert.

## Patentansprüche

1. Vorrichtung zum lageorientierten Zuführen asymmetrischer Werkstücke beim Beschicken von Verarbeitungsmaschinen, bei denen die Werkstücke auf einer Zuführungsschiene, in der eine Wendestation und ein Sensor zur Erkennung der Sollage der Werkstücke (2) angeordnet sind, transportiert werden, **dadurch gekennzeichnet,** daß an der Wendestation ein Schwenkmotor (3) und koaxial zum Schwenkmotor (3) ein schwenkbarer Anschlag (4) angeordnet sind, der zwei Anschlagflächen enthält, die jeweils auf der Einlauf- und der Auslaufseite der Wendestation den Transportweg verschließen und freigeben.

2. Vorrichtung nach Anspruch 1, **dadurch gekennzeichnet,** daß der schwenkbare Anschlag (4) auf einer Seite der Wendestation einen drehbaren Innenanschlag (4.1) und auf der anderen Seite der Wendestation einen drehbaren Außenanschlag (4.2) enthält.

3. Vorrichtung nach Anspruch 1 oder 2, **dadurch gekennzeichnet,** daß an der Auslaufseite der Wendestation zwei Lichtschranken angeordnet sind, wovon eine die Position des Werkstücks (2) in der Endlage der Wendevorrichtung erkennt und eine zweite die Soll- oder Falschlage des Werkstücks (2) erkennt.

4. Vorrichtung nach einem der Ansprüche 1 bis 3, **dadurch gekennzeichnet, daß** der Schwenkmotor (3) pneumatisch angetrieben wird.

5. Vorrichtung nach einem der Ansprüche 1 bis 4, **dadurch gekennzeichnet,** daß an der Zuführungsschiene (1) eine pneumatische Einrichtung zum Anheben und/oder zum Beschleunigen des zu bewegenden Werkstücks (2) angeordnet ist.

6. Vorrichtung nach einem der Ansprüche 1 bis 5, **dadurch gekennzeichnet,** daß die Vorrichtung verbunden ist mit einer Einrichtung zum Wenden von Werkstücken um eine Achse in Transportrichtung, wobei die Werkstücke (2) eine Grundfläche (2.1) aufweisen, welche breiter als die übrige Breite der Werkstücke (2) ist, wobei die Einrichtung gebildet wird durch eine in einem Schwingförderer (10) angebrachte Laufschiene (11), deren seitliche Begrenzungsfläche (11.2) eine ansteigende Höhe aufweist und wobei an dem Schwingförderer (10) im Bereich der größeren Höhe eine Zusatzluftdüse (12 angeordnet ist.

7. Vorrichtung nach Anspruch 6, **dadurch gekennzeichnet,** daß die Grundfläche (11.1) der Laufschiene (11) schmaler als die Grundfläche (2.1) des Werkstückes (2) ist.

## Claims

1. Device for the position-oriented feeding of asymmetric workpieces for the loading of processing machines in case of which the workpieces are transported on a feeding rail in which a turnover station and a sensor for the recognition of the nominal position of the workpieces (2) are arranged, characterized in that a swivel motor (3) is disposed on the turnover station, and that a swivelling stop (4) is disposed co-axially to the swivel motor (3), with this swivelling stop (4) containing two stopping faces which block and unblock the route of transport on the incoming and the outgoing side of the turnover station.

2. Device according to claim 1, characterized in that the swivelling stop (4) contains a pivoted internal stop (4.1) on one side of the turnover station, and a pivoted external stop (4.2) on the other side of the turnover station.

3. Device according to any of claim 1 or 2, characterized in that two light barriers are disposed on the outgoing side of the turnover station, with one of them recognizing the position of the workpiece (2) in the terminal position of the turnover station, and the other the nominal or wrong position of the workpiece (2).

4. Device according to any of claims 1 to 3, characterized in that the swivel motor (3) has a pneumatic drive.

5. Device according to any of claims 1 to 4, characterized in that a pneumatic unit for raising and/or accelerating the workpiece (2) to be handled is disposed on the feeding rail (1).

6. Device according to any of claims 1 to 5, characterized in that the device is connected to a unit for turning over the workpieces round an axis in the direction of transport, with the workpieces (2) having a base area (2.1) which is wider than the remaining width of the workpieces (2). The unit is formed by a running rail (11) arranged in an oscillating conveyor (10), with the lateral end-face (11.2) of the running rail presenting an increasing height, and an auxiliary air nozzle (12) being disposed on the oscillating conveyor (10) in the region of the greater height.

7. Device according to claim 6, characterized in that the base area (11.1) of the running rail (11) is smaller than the base area (2.1) of the workpiece (2).

## Revendications

1. Dispositif pour l'amenage en fonction de la position de pièces d'oeuvre asymétriques lors du chargement de machines d'usinage où les pièces d'oeuvre sont transportées sur un rail d'alimentation dans lequel sont disposés une station de renversement et un détecteur pour la reconnaissance de la position prescrite des pièces d'oeuvre (2), ledit dispositif étant caractérisé en ce qu'à la station de renversement est disposé un moteur oscillant (3) et qu'une butée orientable (4) est disposée de façon coaxiale au moteur oscillant (3), ladite butée orientable comprenant deux surfaces d'arrêt qui bloquent et débloquent le parcours de transport chaque fois sur le côté d'entrée et de sortie de la station de renversement.

2. Dispositif selon revendication 1, caractérisé en ce que la butée orientable (4) contient une butée pivotante intérieure (4.1) sur l'un des côtés de la station de renversement et une butée pivotante extérieure (4.2) sur l'autre côté de la station de renversement.

3. Dispositif selon l'une des revendications 1 ou 2, caractérisé en ce que sur le côté de sortie de la station de renversement sont disposés deux barrages photoélectriques dont l'un barrage photoélectrique reconnaît la position de la pièce d'oeuvre (2) en position finale du dispositif de renversement et l'autre barrage photoélectrique reconnaît la position prescrite ou bien la position fausse de la pièce d'oeuvre (2).

4. Dispositif selon l'une des revendications 1 à 3, caractérisé en ce que le moteur oscillant (3) est commandé pneumatiquement.

5. Dispositif selon l'une des revendications 1 à 4, caractérisé en ce que sur le rail d'alimentation (1) est prévu un dispositif pneumatique pour lever et/ou accélérer la pièce d'oeuvre (2) à manipuler.

6. Dispositif selon l'une des revendications 1 à 5, caractérisé en ce qu'il est relié à une installation pour tourner des pièces d'oeuvre autour d'un ce en direction de transport, la largeur de la surface de base (2.1) des pièces d'oeuvre (2) étant plus grande que la largeur des pièces d'oeuvre (2) en soi. Cette installation est formée par un rail de roulement (11) disposé dans un convoyeur oscillant (10), la périphérie latérale (11.2) du rail de roulement (11) présentant une hauteur montante, et une buse d'air additionnelle (12) étant prévue sur le convoyeur oscillant (10) dans la zone de la hauteur plus grande.

7. Dispositif selon revendication 6, caractérisé en ce que la largeur de la surface de base (11.1) du rail de roulement (11) est inférieure à la largeur de la surface de base (2.1) de la pièce d'oeuvre (2).
